# EUROPEAN PATENT SPECIFICATION

(11) **EP 2 088 731 B1**
(45) Date of publication and mention of the grant of the patent: **06.09.2017**
(21) Application number: 08748662.7
(22) Date of filing: 22.05.2008
(51) Int. Cl.: H04L 29/06

(54) **NETWORK COMMUNICATION DATA PROCESSING METHOD, NETWORK COMMUNICATION SYSTEM AND CLIENT**
VERFAHREN ZUR VERARBEITUNG VON NETZWERKKOMMUNIKATIONSDATEN, NETZWERKKOMMUNIKATIONSSYSTEM UND ENDGERÄT
PROCÉDÉ DE TRAITEMENT DE DONNÉES DE COMMUNICATION EN RÉSEAU, SYSTÈME DE COMMUNICATION EN RÉSEAU ET CLIENT

(30) Priority: 11.06.2007 CN 200710112366
(43) Date of publication of application: 12.08.2009
(73) Proprietor: Huawei Technologies Co., Ltd., Longgang District Shenzhen, Guangdong 518129 (CN)
(72) Inventor: WEI, Jiahao, Shenzhen Guangdong Province 518129 (CN); WANG, Zhibing, Shenzhen, Guangdong province 518129 (CN); YAN, Zhefeng, Shenzhen Guangdong Province 518129 (CN); CHEN, Haohua, Shenzhen, Guangdong Province 518129 (CN); XUE, Chuansong, Shenzhen, Guangdong Province 518129 (CN)
(74) Representative: Pfenning, Meinig & Partner mbB
(86) International application number: PCT/CN2008/071057
(87) International publication number: WO 2008/151536

(56) References cited:
- CN-A- 1 889 490
- CN-A- 1 909 509
- CN-A- 1 937 778
- CN-A- 101 102 312
- KR-A- 20050 002 457
- US-A1- 2006 080 454
- US-A1- 2007 019 663
- CHOI H ET AL: "Signaling for extraction of discardable layers" JOINT VIDEO TEAM (JVT) OF ISO/IEC MPEG & ITU-T VCEG(ISO/IEC JTC1/SC29/WG11 AND ITU-T SG16 Q6), XX, XX, no. JVT-T044, 16 July 2006 (2006-07-16), XP030006531

## Description

### Field of the Invention

The present invention relates to Internet technologies, and in particular, to a method for processing network communication data, a network communication system and a client.

### Background of the Invention

As rapid development of the Internet gives great convenience for people's life and work, better Quality of Service, QoS, and faster access are required. While the bandwidth of a national backbone network is constantly increased, the user base of the Internet is also growing. Due to the limit of load capacity of web servers and transmission distance, people often complain about low response speeds and insufficient bandwidth resources.

The purpose of a Content Delivery Network, CDN, is to add a new network structure over the existing Internet so as to deliver contents of a website to a network edge closest to a user. Thus, the user can get required contents from the proximity and the congestion of the Internet backbone network is relieved. The response speed when the user visits a website is therefore higher. The CDN is located at the network edge, only one hop from the user. By considering user proximity and server loads, the CDN assures that contents are delivered in response to a user request in a most efficient manner.

Peer To Peer, P2P, is another important technology arising with the growth of the Internet. By utilizing idle resources and processing capabilities of abundant communication terminals distributed at the network edge, P2P overcomes the weaknesses induced by over dependence of the traditional server/client mode on a central server, including high cost of deployment and maintenance, instable performance and poor scalability. P2P realizes distributed applications in the real sense.

The growth of network applications in recent years shows a trend of constant increase of demands for multimedia contents, including Video on Demand (VoD, such as movies and TV series) and live video (live sports). CDN related technologies are gradually applied to the delivery of video contents and thus give birth to a Media Delivery Network, MDN, that is dedicated to delivery of multimedia contents. Because video contents are transmitted in large volumes in real time, delivering video contents to an edge server closest to a user assures better quality of play and significantly reduces impacts on the backbone network.

The combination of CDN and P2P technologies shows many advantages in delivering and playing media streams over the Internet. It is an important technique for deploying such services on large scales and also a technical trend in the field.

In a prior P2P live video solution, the start (or channel zapping) play delay, which means the time interval from click on a program to playing of a video program, is normally 20 seconds. This long delay impacts the user experience. When implementing the present invention, the inventor finds that a client in a prior P2P system obtains data of a selected channel from its parent peer, but because clients in the P2P system are peers of one another, the rate of data obtained by the client from its parent peer is the same as the bit rate of the selected channel. Furthermore, it is time consuming to select and search for multiple peers. As a result, it is impossible for the prior art to solve the problem of long start (or channel zapping) delay.

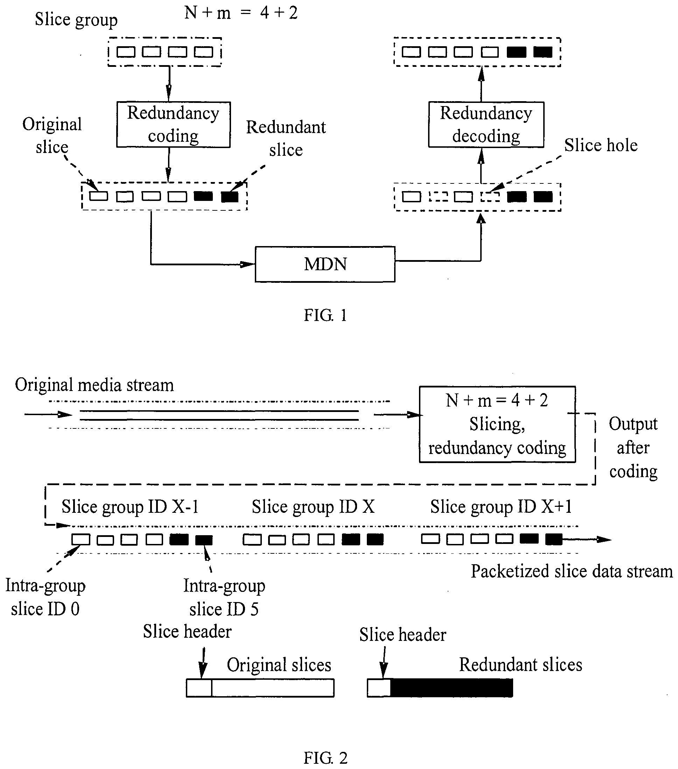

In addition, the P2P streaming system takes an IP switching network as the data transmission channel. Due to disturbance or shortage of bandwidths, the quality of data transmission over IP is not assured. User Datagram Protocol, UDP, packets carrying media data slices may be lost during the transmission. The quality of video viewed by the user is therefore lower. The above defect may be rectified by applying the Forward Error Correction, FEC, algorithm at the packet level. The basic principle of FEC is shown in FIG. 1. N data slices are encoded to (N+m) data slices at the transmitting end, where m is the number of added redundant slices. In FIG. 1, N is 4 and m is 2. The (N+m) data slices are transmitted by the MDN. When the receiving end detects a slice hole in the slice group, the receiving end may recover the N original packets by means of redundancy decoding of any N of the (N+m) packets.

The specific stream slice splitting and redundancy coding principle is shown in FIG. 2. Original media data is split to data slices of an equal size at the transmitting source. After redundancy coding, a number of redundant slices of an equal size are generated. The slices are numbered on an inter-group and intra-group basis. Then slice header information is added to the original slices and redundant slices. A slice header includes the slice group serial number where the slice belongs and the number of the slice in the group, as well as time stamp and media metadata information (for example, whether a key frame ID and a frame data offset are included). Finally the slices are delivered to the client. Before playing the data, the client strips the slice header and assembles and recovers the original media data stream, which is fed to a media player. Thus, the playing of live contents is realized.

By adding redundant slices, retransmission can be avoided to a large extent at the cost of a certain extra bandwidth for transmission of the redundant slices. This cost is worthwhile in a streaming system. The inventor, however, finds that FEC algorithm requires complete data of a slice group. The receiving end must receive at least N slices. If more than m slices in original group are missing at the receiving end, the data cannot be recovered in entirety.

Document US2006/080454 A1 discloses that a "PeerStreamer" provides receiver-driven peer-to-peer (P2P) media streaming for loosely coupled P2P networks. Peers in the network perform only simple operations, may cache all or part of the streaming media, do not collaborate with other peers, may be unreliable, and may drop offline or come online during any given streaming session. The PeerStreamer uses high rate erasure resilient coding to allow multiple serving peers to hold partial media without conflict, such that clients simply retrieve fixed numbers of erasure coded blocks regardless of where and what specific blocks are retrieved.

### Summary of the Invention

Embodiments of the present invention provide a method for processing network communication data, a network communication system and a client so as to shorten the play delay of a selected channel.

A method for processing network communication data includes:
determining a corresponding media server and parent peers of a client in a P2P system according to a channel selected by a user;
determining a start slice group ID for current data processing according to related information of the parent peers and sending a message to the media server to request data of the channel, where the message carries the start slice group ID; and
receiving data of the channel, wherein the data of the channel is transmitted by the media server at a start rate which is higher than the bit rate of the channel according to the start slice group ID, and receiving data of the channel transmitted by the parent peers;
when detecting that a latest transmission point of the media server in a local buffer is the same as a latest transmission point of a designated parent peer in the local buffer, notifying the media server to change the data transmission rate to the same as the bit rate of the channel; and
when detecting that the latest transmission point of the media server in the local buffer is the same as a start transmission point of any parent peer, notifying the media server to stop transmitting a data substream corresponding to the parent peer to the client; wherein the local buffer is in the client.

A client includes:
a channel selector, adapted to determine and output a channel selected by a user;
a topology manager, adapted to determine a corresponding media server and parent peers of the client in a P2P system according to the selected channel output by the channel selector, determine a start slice group ID for current data processing according to related information of the parent peers, and send a message to the media server to request data of the channel, where the message carries the start slice group ID; and
a buffer manager, adapted to receive data of the channel, wherein the data of the channel is transmitted by the media server at a start rate which is higher than the bit rate of the channel according to the start slice group ID, and to receive data of the channel transmitted by the parent peers; wherein the buffer manager of the client includes: a first function unit adapted to check whether a latest transmission point of the media server in a local buffer is the same as a latest transmission point of a designated parent peer in the local buffer, and when detecting that the latest transmission point of the media server in the local buffer is the same as the latest transmission point of the designated parent peer in the local buffer, to notify the media server to change the data transmission rate to the same as the bit rate of the channel; and a second function unit adapted to check whether a latest transmission point of the media server in the local buffer is the same as a start transmission point of a parent peer in the local buffer, and when detecting that the latest transmission point of the media server in the local buffer is the same as a start transmission point of any parent peer in the local buffer, to notify the media server to stop transmitting a data substream corresponding to the parent peer to the client; wherein the local buffer is in the client.

A network communication system includes a P2P system and a media server, where the P2P system includes at least one client and at least one parent peer of the client, where:
the client in the P2P system is adapted to determine a media server according to a channel selected by a user and parent peers of the client in the P2P system, to determine a start slice group ID for current data processing according to related information of the parent peers, and to send a message to the media server to request data of the channel, where the message carries the start slice group ID, to transmit data to a child peer of the client, to detect whether a latest transmission point of the media server in a local buffer is the same as a latest transmission point of a designated parent peer in the local buffer, and when detecting that the latest transmission point of the media server in the local buffer is the same as the latest transmission point of the designated parent peer in the local buffer, to notify the media server to change the data transmission rate to the same as the bit rate of the channel; and to check whether a latest transmission point of the media server in the local buffer is the same as a start transmission point of a parent peer in the local buffer, and when detecting that the latest transmission point of the media server in the local buffer is the same as the start transmission point of any parent peer in the local buffer, to notify the media server to stop transmitting a data substream corresponding to the parent peer to the client;
the media server is adapted to transmit the data of the channel at a start rate which is higher than the bit rate of the channel to the client according to the start slice group ID; and the at least one parent peer is adapted to transmit the data of the channel; wherein the local buffer is in the client.

With the above technical solution, a client gets a section of data starting from a start slice group for one data processing via a media server. The media server can quickly start data transmission to the client. The client can therefore quickly start playing a video file with a shorter play delay of the selected channel. Furthermore, because a media server is adopted on the basis of a P2P system to deliver video files, high-quality video files can be delivered.

### Brief Description of the Drawings

FIG. 1 shows the basic principle of an FEC algorithm at the packet level in a prior art;
FIG. 2 shows the principle of stream slicing and redundancy coding in a prior art;
FIG. 3 shows a quick buffering flowchart in a method for processing network communication data in an embodiment of the invention;
FIG. 4 shows a quick buffering process in a first embodiment of the invention;
FIG. 5 shows a quick buffering process in a second embodiment of the invention;
FIG. 6 shows a flowchart of processing a play area in an embodiment of the invention;
FIG. 7 shows a structure of a client provided in an embodiment of the invention; and
FIG. 8 shows a network communication system provided in an embodiment of the invention.

### Detailed Description of the Invention

In an embodiment of the invention, a client determines a media server and parent peers of the client in a P2P system according to a channel selected by a user.

The client determines a start slice group ID for the current data processing according to related information of the parent peers and sends a message to the media server to request data of the channel. The message carries the start slice group ID.

The client receives data of the channel transmitted by the media server according to the start slice group ID and receives data of the channel transmitted by the parent peers.

With the above technical solution, a client gets a section of data starting from a start slice group for one data processing via a media server. The media server can quickly start data transmission to the client, which avoids the situation of taking a long time in searching for and selecting multiple parent peers. The client can therefore quickly start playing a video file. Furthermore, because a media server is adopted on the basis of a P2P system to deliver video files, the method provided in the embodiment of the invention can deliver high-quality video files. In addition, because the media server can transmit data of a selected channel at a rate higher than the bit rate of the video channel, a start rate for the media server to transmit data of the channel to the client may be determined before the media server transmits data of the channel to the client and this start rate may be set to be higher than the bit rate of the channel. Thereby, the client may obtain a section of data starting from a start slice group for one data processing in a short time, so that the client can start playing the data after a short delay. The play delay of the selected channel is therefore further reduced.

The present invention is hereinafter described in detail with reference to some preferred embodiments and the accompanying drawings.

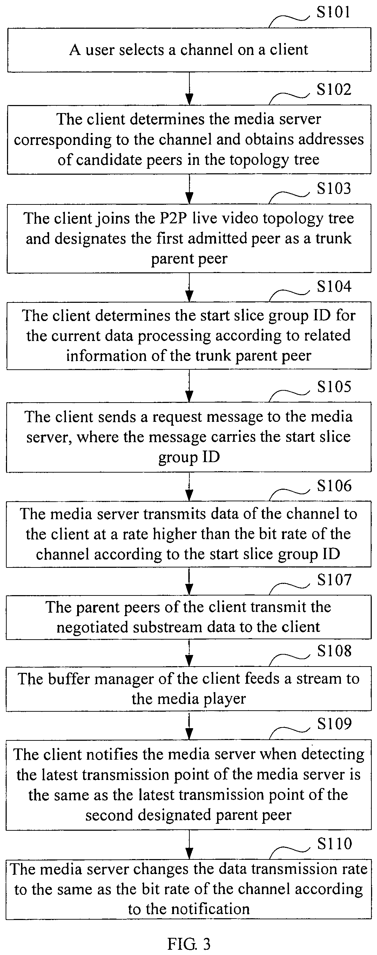

FIG. 3 shows a quick buffering flowchart in a method for processing network communication data in an embodiment of the invention. The procedure includes the following steps:
Step S101: A user selects a channel on a client.

In this step, the selected channel may be started directly or started by channel zapping.

Step S102: The topology manager of the client interacts with a Request Routing System for P2P, RRS-P, to determine a media server of the channel and obtain addresses of candidate peers in the topology tree.

Step S103: The topology manager communicates with the candidate peers randomly to join the P2P live video topology tree, and designates the first admitted peer as a trunk parent peer.

Step S104: After obtaining related information of the trunk parent peer (such as position information of the transmission point), the topology manager determines the start slice group ID for the current data processing according to the related information.

The topology manager usually triggers the initialization of a buffer manager after obtaining the related information of the trunk parent peer.

In practice, the method for determining the start slice group ID may be based on the related information of a designated parent peer (the first designated parent peer) other than the trunk parent peer. For example, the client may initiate connection requests to multiple peers in the obtained peer list and specify that the peer in the list first responding to the connection request is the designated parent peer. In this embodiment of the invention, the trunk parent peer is used.

Specifically, this step may be implemented as follows: the topology manager calculates the number of slice groups that can be cached in a reserved buffer area based on the bit rate of the channel and the preset size of the reserved buffer area; after obtaining the transmission point currently provided by the trunk parent peer for the client, the topology manager determines the start slice group ID according to the slice group ID of the transmission point and the number of slice groups that can be cached in the reserved buffer area, where the start slice group is ahead of the slice group of the transmission point provided by the parent peer for the client; therefore, the start slice group ID may be ahead of the slice group ID of the transmission point by the number of slice groups that can be cached in the reserved buffer area.

Step S105: The topology manager sends a message to the media server to request data of the channel. The message carries the start slice group ID.

Step S106: The media server transmits data of the channel to the client at a rate higher than the bit rate of the channel according to the start slice group ID.

At the initial stage, packets transmitted by the media server to the client include all data substreams of the channel, where a substream is a continuous slice stream composed of slices of a same slice ID.

In this embodiment of the invention, the start rate is higher than the bit rate of the channel. In this step, however, the start rate at which the server transmits data to the client is a configurable parameter. Either of the following methods may be used for determining the start rate:

The media server determines the start rate according to the locally configured bit rate times and the bit rate of the channel;

The media server determines the start rate according to the bit rate of the channel and the bit rate times carried in the request of the client.

For example, the data transmission rate locally configured at the media server is 1.8 times the bit rate of the channel. When the media server receives the request of the client, the media server will transmit data to the client at a rate 1.8 times the bit rate of the channel.

The data transmission rate should not be larger than the maximum bandwidth of the client.

Step S107: The parent peers of the client transmit the negotiated substream data to the client.

In practice, step S 106 may be carried out before or after step S 107.

The client receives the data transmitted by the media server and the parent peers via the local buffer, which is usually a winding structure arranged in a form similar to a cyclic queue.

Step S108: The buffer manager feeds a stream to the media player.

In practice, the buffer manager may start feeding the stream to the media player when the preset duration expires after the user selects the channel.

The buffer manager also starts feeding the stream to the media player when a first set duration expires after the client sends a data request to the media server.

In addition, the buffer manager may also check whether the continuous complete data starting from the start slice group received by the local buffer reaches a first threshold and start feeding the stream to the media player when detecting that the data volume reaches the first threshold.

As in the prior art, the buffer manager releases the buffer area after the stream is fed.

Step S109: When the buffer manager detects that the latest transmission point of the media server in the buffer is the same as the latest transmission point of a second designated parent peer, the buffer manager notifies the media server to change the data transmission rate to the same as the bit rate of the channel.

The second designated parent peer may be any parent peer of the client.

The latest transmission point indicates that the sequence number of the largest slice group of the corresponding parent peer or media server is received. This point grows with the play progress and the reception of slices. Each substream has a latest transmission point.

Step S110: The media server changes the data transmission rate to the same as the bit rate of the channel according to the notification.

In the above procedure, when the buffer manager detects that the latest transmission point of the media server in the buffer is the same as the start transmission point of one parent peer, the buffer manager may notify the media server to stop transmitting the data substream corresponding to the parent peer to the client. Specifically, the buffer manager may let the corresponding notification message carry an ID of the substream transmitted by the parent peer and the media server stops transmitting the data substream corresponding to the substream ID upon reception of the notification. Based on the above procedure, the media server only needs to transmit related data at a high rate at the initial stage of media buffering after the user selects a channel. Later, the media server can stop transmitting the data substream corresponding to a parent peer when the latest transmission point of the media server is the same as the start transmission point of the parent peer. As the latest transmission point of the media server constantly chases the start transmission point of the parent peers, the media server can gradually stop transmitting data to the parent peers and the client can obtain data of the selected channel from the parent peers.

In addition, the procedure does not limit that the buffer manager notifies the media server to change the data transmission rate to the same as the bit rate of the channel when detecting that the latest transmission point of the media server in the buffer is the same as the latest transmission point of the second designated parent peer. In practice, the buffer manager may detect the volume of data received from the media server and notify the media server to change the data transmission rate to the same as the bit rate of the channel when detecting that the data volume is larger than a set second threshold; or the buffer manager may detect the idle space of the buffer and notify the media server to change the data transmission rate to the same as the bit rate of the channel when detecting that the idle space in the buffer is smaller than a set third threshold.

In practice, the downlink bandwidth of a client is limited. When data is transmitted to the client simultaneously over a large number of links, transmission problems like large numbers of slice losing may result. Therefore, it is necessary to limit the number of simultaneous links. Furthermore, because the buffer manager starts feeding the stream to the media player from the start slice group and the media server starts transmission from the start slice group, the effective start transmission point of no parent peer of the client is earlier than the start transmission point of the media server. Therefore, to better reduce the play delay of the selected channel and minimize the possibility of transmission problems, the client should preferably guarantee the effective downlink bandwidth for the media server before the media server changes the data transmission rate to the same as the bit rate of the channel.

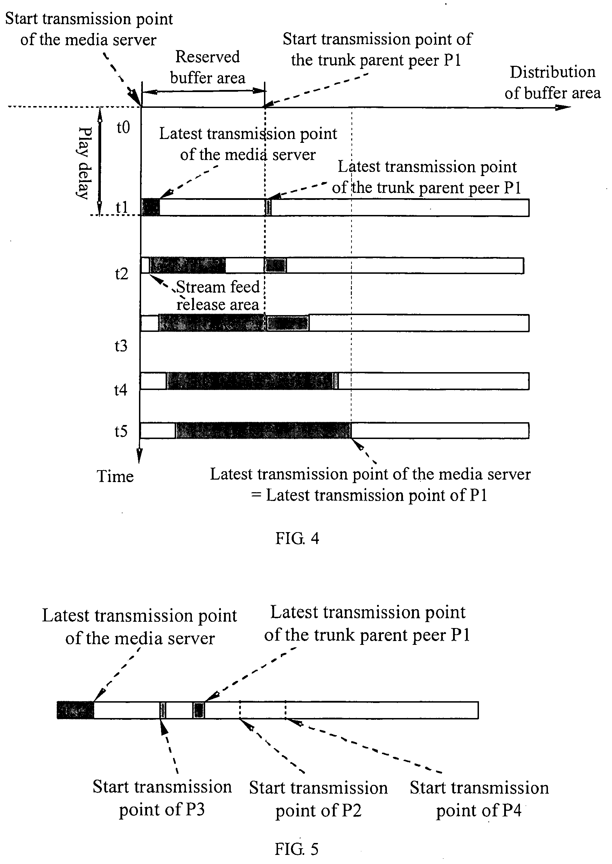

The first embodiment is shown in FIG. 4. Among the parent peers of a client, the start transmission point of the trunk parent peer P1 is ahead of the start transmission points of other parent peers (FIG. 4 shows only the position of the start transmission point of the trunk parent peer) and the trunk parent peer P1 is the first designated parent peer and the second designated parent peer for the current transmission. In addition, the buffer manager starts feeding data to the media player when a set duration expires after the client sends a data request to the media server. The method shown in FIG. 4 includes:
1. At time t1, the buffer manager of the client sends a data request to the media server according to the calculated start transmission point of the media server and the media server transmits data to the client at a rate 1.8 times the bit rate of the selected channel. The data substream of the trunk parent peer is transmitted simultaneously according to the transmission point of the parent peer. The start position of the buffer (usually the start position of the buffer is the start transmission point of the media server) receives slice data of (N+m) subtreams transmitted by the media server. From the start position, after a preset reserved buffer area is full (which means the start transmission point of the trunk parent peer P1 is reached), the buffer starts receiving a single substream transmitted by the trunk parent peer P1.
2. At time t2, when a set interval from t1 expires, the buffer manager starts feeding the stream to the media player. The initial stream feed point is the start transmission point of the media server. Later the buffer manager feeds stream data to the media player periodically by means of a certain mechanism such as a timer-driven mechanism, where a stream feed point identifies a data locator according to which the buffer manager of the client feeds stream data to the media player.
3. At time t3, the quick buffering continues. After feeding stream data to the media player, the buffer manager releases the related buffer area, which results in the stream feed release area shown in the figure.
4. At time t4, when the latest transmission point of the media server chases up the substream start transmission point corresponding to the parent peer P1, the client notifies the media server to stop transmitting the substream with the same ID as the substream corresponding to the P1 peer. This means the media server starts to transmit slice data of only (N+m-1) substreams at time t4.
5. At time t5, the latest transmission point of the media server chases up the latest substream transmission point corresponding to the P1 peer. In this embodiment, because the P1 peer is the second designated parent peer, the buffer manager notifies the media server to change the rate for transmitting the remaining substreams to the normal bit rate of the channel, that is, from 1.8 times the bit rate to the bit rate. The quick buffering process of the client comes to an end.

When the latest transmission point of the media server chases up the start transmission point of another parent peer, the buffer manager also notifies the media server to stop transmitting the substream with the same ID as the substream corresponding to the parent peer. The "chase" process is shown in FIG. 4. Entity 1 chases entity 2, where entity 1 is located at the right border of the black block and entity 2 is located at the right border of the slashed block. Viewed from left to right, the buffer axis of the client shows that, initially, the position of entity 1 is behind the position of entity 2 but the speed of entity 1 is higher. The distance between the two entities is the difference between the right borders of the two blocks. The distance is gradually shorter from t1 to t4 and becomes 0 at t5, indicating that entity 1 chases up entity 2 at t5. Here, entity 1 represents the buffer transmission position of the media server and entity 2 represents the buffer transmission position of the P1 peer. Accordingly, "chase up" means subsequent buffer data can be transmitted by P1 alone to the client. At t5, the media server cuts off the transmission of subsequent data of the substream.

The second embodiment of the invention is shown in FIG. 5, where the start transmission point of the parent peer P3 is ahead of the transmission point of the trunk parent peer P3 and the client has four parent peers (P1 to P4) for the current P2P transmission. In this embodiment, P2 is the second designated parent peer for the current transmission. To guarantee the effective bandwidth between the media server and the client in preference, not all parent peers need to transmit their substream slice data immediately upon being connected when the total downlink bandwidth is limited. Instead, all parent peers may be set to the choke state after they are successfully connected. Choke means a parent peer does not transmit data slices upon connection but periodically notifies the client of the value of the transmission point that it can provide for the client. Alternatively, the designated parent peer may be set to transmit data slices while other parent peers are set to the choke state. For example, P3 and P1 may be set to transmit data slices while P2 and P4 are in the choke state. When some parent peers are set to the choke state, after the quick buffering process of the media server is complete (that is, the transmission rate is changed to the bit rate of the channel), the data transmission of the parent peers may be started. Alternatively, the data transmission quality of the media server may be tracked by means of QoS detection on the substream transmission. When the actual rate of the substream transmitted by the media server is basically the same as the theoretical rate, data transmission of the choked parent peers are gradually started and data transmission is started from the recorded latest transmission point.

In this embodiment, when the latest transmission point of the media server chases up the start transmission point of P3, the client notifies the media server to stop transmitting the substream with the same ID as the substream corresponding to P3; when the latest transmission point of the media server chases up the start transmission point of P1, the client notifies the media server to stop transmitting the substream with the same ID as the substream corresponding to P1; when the latest transmission point of the media server chases up the start transmission point of P2, the client notifies the media server to stop transmitting the substream with the same ID as the substream corresponding to P2; when the latest transmission point of the media server chases up the latest transmission point of P2, because P2 is the second designated parent peer for the current transmission, the client notifies the media server to change the data transmission rate of the remaining substream to the normal bit rate of the channel, and the quick buffering process of the client comes to an end.

To guarantee the quality and continuity of video playing on the client, it is necessary to guarantee that the buffer feeds sufficient and complete media data to the media player at any time. Therefore, in this embodiment, the buffer manager should further guarantee that data in the play area between the stream feed point and the integrity check point is complete media data. The integrity check point identifies the play area end locator, where the play area is determined by the stream feed point and a set play area length.

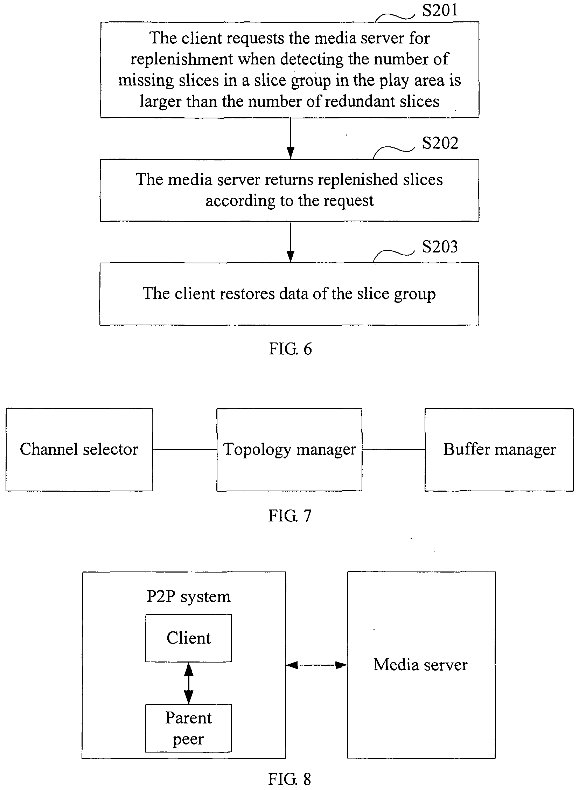

In the prior art, because packet level FEC is adopted to transmit slice groups and recover data, even when slice losing occur to the slice groups in a play area, the original slice data can be recovered from N slices provided that N slices of a group of (N+m) slices are received. In an embodiment of the invention, a play area is processed to guarantee data integrity in a scenario where more than m slices are missing in a slice group received at the receiving end and the FEC algorithm cannot recover complete data. As shown in FIG. 6, the process includes the following steps:
Step S201: The client scans the play area periodically to check whether the number of slices missing in the received slice groups is larger than the number of redundant slices and requests replenishment from the media server when detecting that the number of slices missing in one slice group is larger than the number of redundant slices.

When requesting replenishment from the media server, the client may request the media server to replenish all missing original slices in the group or request the media server to replenish partial missing slices (which may be original slices or redundant slices) according to the number of missing slices in the group.

Step S202: The media server returns the replenished slices according to the request.

If the client requests the media server to replenish all missing original slices, the process ends at this step. If the client requests the media server to replenish partial missing slices, the process continues with step S203.

Step S203: The client recovers data of the slice group based on the slices in the buffer and the partial missing slices replenished by the media server.

In the above process, if the client requests the media server to replenish all missing original slices, a larger network bandwidth is required and the media server is more heavily loaded. If the client requests the media server to replenish partial missing slices, the client must further process the data by using the FEC algorithm. In practice, the two processing modes may be selected according to actual needs.

In the third embodiment of the invention, N+m=8+2. If the client detects that the distribution of slices in a received slice group is 5+1 (5 original slices and 1 redundant slice). To guarantee the integrity of 8 original slices, the client may directly request the 3 missing original slices, or the client may request 2 slices and recover the 8 original slices based on the 7+1 slices, or the client may request 1 slice and 1 redundant slice and recover the 8 original slices based on the 6+2 slices.

In addition, loss of UDP packets that carry media data slices is inevitable and the network transmission path for substream slices is likely to be congested or even broken. To assure the quality of play, when a large number of packets are lost, the buffer manager of the client should be able to detect the exception and notify the topology manager to make an adjustment to resume transmission of the substream. The basic principle of substream transmission QoS detection is as follows:

The buffer manager tracks the transmission quality of each substream according to the slice counter of the each substream and checks the average data rate of each substream periodically. Once the buffer manager detects that the average data rate in a set proportion or number of cycles within a specified time is below a set fifth threshold, the buffer manager determines that the substream becomes exceptional in the last cycle. For example, the buffer manager regularly (periodically) calculates the average data rate in the past cycle and in continuous β cycles; if the average data rate is lower than the fifth threshold in accumulatively α cycles, the buffer manager determines that the substream is exceptional.

Once the buffer manager detects the exception of the substream, the buffer manager may notify the topology manager immediately to change the source of the substream. For example, before a substream becomes exceptional, the substream is transmitted by the parent peer P5. Upon detection of the exception, the topology manager can determine to let another parent peer that can provide the substream to transmit the substream or obtain the data directly from the media server. Accordingly, when the parent peer of a substream changes, the corresponding data slice counter is reset.

In practice, the QoS detection may be performed by any module that is able to know the substream transmission situation, other than by the buffer manager.

In the above solution, the media server may be any server that stores data of the related channel. However, there is already a CDN, of which related technologies are gradually applied to the delivery of video contents. Delivering video contents to an edge server closest to a user via the CDN provides better video quality for the user while greatly reduces impacts on the backbone network. Therefore, in an embodiment of the invention, the media server may a Media Sever for P2P, MS-P, in a CDN. MS-Ps can provide clients with data in their buffers. In practice, an MS-P may check whether the volume of data it can provide for a client is not above a set fourth threshold on a regular basis when transmitting data to the client, and change the data transmission rate to the same as the bit rate of the channel when detecting that the data transmission rate is not above the fourth threshold. The fourth threshold may be set according to actual needs. Or the fourth threshold may be set to 0, and in this case, when the substream slice groups transmitted by the MS-P to the client reach the end of data existing in the buffer, the MS-P changes the data transmission rate to the same as the bit rate of the channel.

According to experiments, by obtaining a section of data from a start slice group for one data processing from an MS-P in a CDN, a client can obtain the section of data in a short time and thereby may start to play the data after a short delay. The purpose of shortening the play delay of a selected channel is thus achieved. Normally, the play delay is shorter than 5 seconds.

As shown in FIG. 7, a client in an embodiment of the invention includes:
a channel selector, adapted to determine and output a channel selected by a user;
a topology manager, adapted to determine a corresponding media server and parent peers of the client in a P2P system according to the selected channel output by the channel selector, determine a start slice group ID for the current data processing according to related information of the parent peers, and send a message to the media server to request data of the channel, where the message carries the start slice group ID; and
a buffer manager, adapted to receive data transmitted by the media server and parent peers to the client.

The buffer manager of the client may further include a first function unit, adapted to check whether the latest transmission point of the media server in the buffer manager is the same as the latest transmission point of a designated parent peer and when detecting so, notify the media server to change the data transmission rate to the same as the bit rate of the channel.

The buffer manager may further include a second function unit, adapted to check whether the latest transmission point of the media server in the buffer manager is the same as the start transmission point of a parent peer, and when detecting that the latest transmission point of the media server is the same as the start transmission point of any parent peer, notify the media server to stop transmitting the data substream corresponding to the parent peer.

The buffer manager may further include a third function unit, adapted to guarantee an effective downlink bandwidth of the media server in preference.

The buffer manager may further include a fourth function unit, adapted to scan the play area in the buffer manager periodically, where the play area is determined by a stream feed point and a set play area length, check whether slices missing in slice groups in the play area are more than redundant slices, and when detecting so, request the media server for replenishment.

The buffer manager may further include a fifth function unit, adapted to periodically check the average data rate of each substream in a cycle, and when detecting that the average data rate of one substream is below a set fifth threshold in a set proportion or number of cycles within a specified time, determine that the substream is exceptional and notify the topology manager;

Accordingly, the topology manager is adapted to change the source where the client obtains the substream according to the notification.

As shown in FIG 8, a network communication system includes a P2P system and a media server, where the P2P system includes at least one client and at least one parent peer of the client.

The client in the P2P system is adapted to determine a media server according to a channel selected by a user and parent peers of the client in the P2P system, determine a start slice group ID for the current data processing according to related information of the parent peers, and send a message to the media server to request data of the channel, where the message carries the start slice group ID, and transmit data to a child peer of the client.

The media server is adapted to transmit the data of the channel to the client according to the start slice group ID.

The media server may further include a start rate determining module, adapted to determine the start rate at which the media server transmits data of the channel to the client.

The client may be further adapted to check whether the latest transmission point of the media server in the buffer where the client receives the data is the same as the latest transmission point of a designated parent peer, and when detecting so, notify the media server to change the data transmission rate to the same as the bit rate of the channel.

The client may be further adapted to check whether the latest transmission point of the media server in the buffer is the same as the start transmission point of a parent peer, and when detecting that the latest transmission point of the media server is the same as the start transmission point of any parent peer, notify the media server to stop transmitting the data substream corresponding to the parent peer.

The client may be further adapted to scan the play area in the buffer periodically, where the play area is determined by a stream feed point and a set play area length, check whether slices missing in slice groups in the play area are more than redundant slices, and when detecting so, request the media server for replenishment; accordingly, the media server is adapted to transmit slices to the client according to the replenishment request.

The media server may be a media server in a CDN, and may be further adapted to check whether the volume of data that the media server is able to feed to the client is not above a set fourth threshold when transmitting data to the client, and when detecting that the data volume is not above the fourth threshold, change the data transmission rate to the same as the bit rate of the channel.

It is understandable to those skilled in the art that all or part of the steps of the foregoing embodiments can be implemented by hardware following instructions of programs. The programs may be stored in a computer readable storage medium, such as a Read-Only Memory, ROM, a Random Access Memory, RAM, a magnetic disk and a compact disk.

In the embodiments of the invention, a client obtains a section of data starting from a start slice group for one data processing via a media server, and thereby obtains the data in a short time. As a result, the client may start to play the data after a short delay and thus shorten the play delay of a selected channel. Furthermore, in the embodiments of the invention, because the media server is adopted on the basis of a P2P system for delivering video files to the client, high quality video files can be delivered. In addition, the method provided in the embodiments of the invention checks the integrity of the play area and requests the media server for replenishment according to the check result, so that the quality and continuity of video played on the client are assured.

Although the present invention has been described through some exemplary embodiments, the invention is not limited to such embodiments. It is apparent that those skilled in the art can make various modifications and variations to the invention without departing from the scope of the invention. The invention is intended to cover these modifications and variations provided that they fall in the scope of protection defined by the following claims.

## Claims

1. A method for processing network communication data, comprising:
determining (S102) a media server and parent peers of a client in a Peer To Peer, P2P, system according to a channel selected by a user;
determining (S104) a start slice group ID for current data processing according to related information of the parent peers;
sending (S105) a message to the media server to request data of the channel, wherein the message carries the start slice group ID; and
receiving (S106) data of the channel, wherein the data of the channel is transmitted by the media server at a start rate which is higher than the bit rate of the channel according to the start slice group ID, and receiving (S107) data of the channel transmitted by the parent peers;
when detecting that a latest transmission point of the media server in a local buffer is the same as a latest transmission point of a designated parent peer in the local buffer, notifying the media server to change the data transmission rate to the same as the bit rate of the channel; wherein the local buffer is in the client; and
when detecting that the latest transmission point of the media server in the local buffer is the same as a start transmission point of any parent peer in the local buffer, notifying the media server to stop transmitting a data substream corresponding to the parent peer to the client.

2. The method of claim 1, wherein the process of determining (S104) the start slice group ID comprises:
calculating the number of slice groups that can be cached in a preset reserved buffer area according to bit rate of the selected channel, size of a slice, and size of the reserved buffer area; and
determining the start slice group ID with reference to a slice group ID of a current latest transmission point of a first designated parent peer, wherein the start slice group is ahead of the slice group of the current latest transmission point of the first designated parent peer.

3. The method of claim 1, wherein the process of transmitting data of the channel to the client according to the start slice group ID at a start rate which is higher than the bit rate of the channel (106) comprises:
determining a start rate for the media server to transmit data of the channel to the client, wherein the start rate is higher than the bit rate of the channel; and
transmitting, by the media server, the data of the channel to the client according to the start slice group ID at the start rate which is higher than the bit rate of the channel.

4. The method of claim 3, wherein the process of determining the start rate comprises:
determining, by the media server, the start rate according to locally configured bit rate times and the bit rate of the channel;
or
determining, by the media server, the start rate according to the bit rate of the channel and bit rate times carried in the request of the client.

5. The method of claim 1, further comprising:
scanning, by the client, a play area periodically, wherein the play area is determined by a steam feed point and a set play area length;
checking (S201) whether the number of slices missing in slice group is larger than the number of redundant slices; and
requesting (S201) replenishment from the media server when the number of slices in slice group is larger than the number of redundant slices; and
accordingly, returning (S202), by the media server, replenished slices according to the request.

6. The method of claim 5, wherein the process of requesting the media server for replenishment (S201) comprises:
requesting, by the client, the media server to replenish partial missing slices according to the number of slices missing in the slice group; and
restoring, by the client, data of the slice group after obtaining the partial missing slices.

7. The method of claim 1, further comprising:
checking, by the client, an average data rate of each substream in a cycle periodically;
determining the substream is exceptional, and changing a source where the client obtains the substream when detecting that the average data rate of one substream is below a set fifth threshold in a set proportion or number of cycles in a specified time.

8. A client, comprising:
a channel selector, adapted to determine a channel selected by a user;
a topology manager, adapted to determine a media server and parent peers of the client in a Peer To Peer, P2P, system according to the selected channel by the channel selector, determine a start slice group ID for current data processing according to related information of the parent peers, and send a message to the media server to request data of the channel, wherein the message carries the start slice group ID; and
a buffer manager, adapted to receive data of the channel, wherein the data of the channel is transmitted by the media server at a start rate which is higher than the bit rate of the channel according to the start slice group ID, and to receive data of the channel transmitted by the parent peers; ;
wherein the buffer manager of the client comprises:
a first function unit adapted to check whether a latest transmission point of the media server in a local buffer is the same as a latest transmission point of a designated parent peer in the local buffer, and when detecting that the latest transmission point of the media server in the local buffer is the same as the start transmission point of the designated parent peer in the local buffer, to notify the media server to change the data transmission rate to the same as the bit rate of the channel; and
a second function unit adapted to check whether a latest transmission point of the media server in the local buffer is the same as a start transmission point of a parent peer in the local buffer, and when detecting that the latest transmission point of the media server in the local buffer is the same as a start transmission point of any parent peer in the local buffer, to notify the media server to stop transmitting a data substream corresponding to the parent peer to the client;
wherein the local buffer is in the client.

9. The client of claim 8, wherein the buffer manager further comprises a fourth function unit, adapted to scan a play area in the buffer manager periodically, wherein the play area is determined by a stream feed point and a set play area length, check whether the number of slices missing in a slice group in the play area is larger than the number of redundant slices, and when detecting so, request the media server for replenishment.

10. The client of claim 8, wherein the buffer manager further comprises a fifth function unit, adapted to periodically check an average data rate of each substream in a cycle, and when detecting that the average data rate of one substream is below a set fifth threshold in a set proportion or number of cycles within a specified time, determine that the substream is exceptional and notify the topology manager; and accordingly,
the topology manager is adapted to change a source where the client obtains the substream according to the notification.

11. A network communication system, comprising a Peer To Peer, P2P, system and a media server, wherein the P2P system comprises at least one client and at least one parent peer of the client;
wherein the client in the P2P system is adapted to determine a media server according to a channel selected by a user and parent peers of the client in the P2P system, to determine a start slice group ID for current data processing according to related information of the parent peers, and to send a message to the media server to request data of the channel, wherein the message carries the start slice group ID, to transmit data to a child peer of the client, to check whether a latest transmission point of the media server in a local buffer is the same as a latest transmission point of a designated parent peer in the local buffer, and when detecting that the latest transmission point of the media server in the local buffer is the same as the latest transmission point of the designated parent peer in the local buffer, to notify the media server to change the data transmission rate to the same as the bit rate of the channel; and to check whether a latest transmission point of the media server in the local buffer is the same as a start transmission point of a parent peer in the local buffer, and when detecting that the latest transmission point of the media server in the local buffer is the same as a start transmission point of any parent peer in the local buffer, to notify the media server to stop transmitting a data substream corresponding to the parent peer to the client;
the media server is adapted to transmit the data of the channel at a start rate which is higher than the bit rate of the channel to the client according to the start slice group ID; and
the at least one parent peer is adapted to transmit the data of the channel;
wherein the local buffer is in the client.

12. The system of claim 11, wherein the client is further adapted to scan a play area periodically, wherein the play area is determined by a stream feed point and a set play area length, and check whether the number of slices missing in a slice group is larger than the number of redundant slices, and when detecting so, request the media server for replenishment; and
the media server is further adapted to transmit slices to the client according to the replenishment request.

## Patentansprüche

1. Verfahren zur Verarbeitung von Netzkommunikationsdaten, umfassend:
Bestimmen (S102) eines Medienservers und übergeordneter Partner eines Clients in einem Partner-zu-Partner(P2P)-System gemäß einem Kanal, der von einem Benutzer ausgewählt wird;
Bestimmen (S104) einer Start-Slice-Gruppen-ID für aktuelle Datenverarbeitung gemäß zugehörigen Informationen der übergeordneten Partner;
Senden (S105) einer Nachricht an den Medienserver, um Daten des Kanals anzufordern, wobei die Nachricht die Start-Slice-Gruppen-ID mitführt; und
Empfangen (S106) von Daten des Kanals, wobei die Daten des Kanals durch den Medienserver bei einer Startrate, die höher als die Bitrate des Kanals ist, gemäß der Start-Slice-Gruppen-ID gesendet werden, und Empfangen (S107) von Daten des Kanals, die durch die übergeordneten Partner gesendet werden;
Benachrichtigen des Medienservers, die Datenübertragungsrate auf dieselbe wie die Bitrate des Kanals umzustellen, bei Erkennen, dass ein letzter Übertragungspunkt des Medienservers in einem lokalen Puffer derselbe wie ein letzter Übertragungspunkt eines festgelegten übergeordneten Partners im lokalen Puffer ist; wobei der lokale Puffer im Client ist; und
Benachrichtigen des Medienservers, das Senden eines Datenteilstroms, der dem übergeordneten Partner entspricht, an den Client zu stoppen, bei Erkennen, dass der letzte Übertragungspunkt des Medienservers im lokalen Puffer derselbe wie ein Übertragungsstartpunkt eines beliebigen übergeordneten Partners im lokalen Puffer ist.

2. Verfahren nach Anspruch 1, wobei der Prozess des Bestimmens (S104) der Start-Slice-Gruppen-ID umfasst:
Berechnen der Anzahl von Slice-Gruppen, die in einem voreingestellten reservierten Pufferbereich zwischengespeichert werden können, gemäß der Bitrate des ausgewählten Kanals, der Größe eines Slices und der Größe des reservierten Pufferbereichs; und
Bestimmen der Start-Slice-Gruppen-ID in Bezug auf eine Slice-Gruppen-ID eines aktuellen letzten Übertragungspunkts eines ersten festgelegten übergeordneten Partners, wobei die Start-Slice-Gruppe vor der Slice-Gruppe des aktuellen letzten Übertragungspunkts des ersten festgelegten übergeordneten Partners ist.

3. Verfahren nach Anspruch 1, wobei der Prozess des Sendens von Daten des Kanals an den Client gemäß der Start-Slice-Gruppen-ID bei einer Startrate, die höher als die Bitrate des Kanals ist (106), umfasst:
Bestimmen einer Startrate für den Medienserver zum Senden von Daten des Kanals an den Client, wobei die Startrate höher als die Bitrate des Kanals ist; und
Senden durch den Medienserver der Daten des Kanals an den Client gemäß der Start-Slice-Gruppen-ID bei der Startrate, die höher als die Bitrate des Kanals ist.

4. Verfahren nach Anspruch 3, wobei der Prozess des Bestimmens der Startrate umfasst:
Bestimmen durch den Medienserver der Startrate gemäß lokal konfigurierten Bitratenzeiten und der Bitrate des Kanals;
oder
Bestimmen durch den Medienserver der Startrate gemäß der Bitrate des Kanals und Bitratenzeiten, die in der Anforderung des Clients mitgeführt werden.

5. Verfahren nach Anspruch 1, ferner umfassend:
periodisches Abtasten durch den Client eines Wiedergabebereichs, wobei der Wiedergabebereich durch einen Stromzufuhrpunkt und eine eingestellte Wiedergabebereichslänge bestimmt wird;
Prüfen (S201), ob die Anzahl von Slices, die in einer Slice-Gruppe fehlen, größer als die Anzahl von redundanten Slices ist; und
Auffordern (S201) des Medienservers zu Ergänzung, wenn die Anzahl von Slices in der Slice-Gruppe größer als die Anzahl von redundanten Slices ist; und
dementsprechendes Zurücksenden (S202) durch den Medienserver von Ergänzungs-Slices gemäß der Aufforderung.

6. Verfahren nach Anspruch 5, wobei der Prozess des Aufforderns des Medienservers zu Ergänzung (S201) umfasst:
Auffordern des Medienservers durch den Client, fehlende Teil-Slices gemäß der Anzahl von Slices, die in der Slice-Gruppe fehlen, zu ergänzen; und
Wiederherstellen durch den Client von Daten der Slice-Gruppe nach dem Erhalten der fehlenden Teil-Slices.

7. Verfahren nach Anspruch 1, ferner umfassend:
periodisches Prüfen durch den Client einer mittleren Datenrate jedes Teilstroms in einem Zyklus;
Bestimmen, dass der Teilstrom außerordentlich ist, und Ändern einer Quelle, wo der Client den Teilstrom erhält, bei Erkennen, dass die mittlere Datenrate eines Teilstroms unter einer eingestellten fünften Schwelle in einer eingestellten Proportion oder Anzahl von Zyklen in einer spezifizierten Zeit ist.

8. Client, umfassend:
einen Kanalwähler, der zum Bestimmen eines Kanals ausgelegt ist, der von einem Benutzer ausgewählt wird;
einen Topologie-Manager, der so ausgelegt ist, dass er einen Medienserver und übergeordnete Partner des Clients in einem Partner-zu-Partner(P2P)-System gemäß dem durch den Kanalwähler ausgewählten Kanal bestimmt, eine Start-Slice-Gruppen-ID für aktuelle Datenverarbeitung gemäß zugehörigen Informationen der übergeordneten Partner bestimmt, und eine Nachricht an den Medienserver zum Anfordern von Daten des Kanals sendet, wobei die Nachricht die Start-Slice-Gruppen-ID mitführt; und
einen Puffer-Manager, der so ausgelegt ist, dass er Daten des Kanals empfängt, wobei die Daten des Kanals durch den Medienserver bei einer Startrate, die höher als die Bitrate des Kanals ist, gemäß der Start-Slice-Gruppen-ID gesendet werden, und Daten des Kanals empfängt, die durch die übergeordneten Partner gesendet werden;
wobei der Puffer-Manager des Clients umfasst:
eine erste Funktionseinheit, die so ausgelegt ist, dass sie prüft, ob ein letzter Übertragungspunkt des Medienservers in einem lokalen Puffer derselbe wie ein letzter Übertragungspunkt eines festgelegten übergeordneten Partners im lokalen Puffer ist, und bei Erkennen, dass der letzte Übertragungspunkt des Medienservers im lokalen Puffer derselbe wie der Übertragungsstartpunkt des festgelegten übergeordneten Partners im lokalen Puffer ist, den Medienserver benachrichtigt, die Datenübertragungsrate auf dieselbe wie die Bitrate des Kanals umzustellen; und
eine zweite Funktionseinheit, die so ausgelegt ist, dass sie prüft, ob ein letzter Übertragungspunkt des Medienservers im lokalen Puffer derselbe wie ein Übertragungsstartpunkt eines übergeordneten Partners im lokalen Puffer ist, und bei Erkennen, dass der letzte Übertragungspunkt des Medienservers im lokalen Puffer derselbe wie ein Übertragungsstartpunkt eines beliebigen übergeordneten Partners im lokalen Puffer ist, den Medienserver benachrichtigt, das Senden eines Datenteilstroms, der dem übergeordneten Partner entspricht, an den Client zu stoppen;
wobei der lokale Puffer im Client ist.

9. Client nach Anspruch 8, wobei der Puffer-Manager ferner eine vierte Funktionseinheit umfasst, die so ausgelegt ist, dass sie einen Wiedergabebereich im Puffer-Manager periodisch abtastet, wobei der Wiedergabebereich durch einen Stromzufuhrpunkt und eine eingestellte Wiedergabebereichslänge bestimmt wird, prüft, ob die Anzahl von Slices, die in einer Slice-Gruppe im Wiedergabebereich fehlen, größer als die Anzahl von redundanten Slices ist, und bei Erkennung dessen den Medienserver zu Ergänzung auffordert.

10. Client nach Anspruch 8, wobei der Puffer-Manager ferner eine fünfte Funktionseinheit umfasst, die so ausgelegt ist, dass sie periodisch eine mittlere Datenrate jedes Teilstroms in einem Zyklus prüft, und bei Erkennen, dass die mittlere Datenrate eines Teilstroms unter einer eingestellten fünften Schwelle in einer eingestellten Proportion oder Anzahl von Zyklen innerhalb einer spezifizierten Zeit ist, bestimmt, dass der Teilstrom außerordentlich ist, und den Topologie-Manager benachrichtigt; und dementsprechend
der Topologie-Manager so ausgelegt ist dass er eine Quelle, wo der Client den Teilstrom erhält, gemäß der Benachrichtigung ändert.

11. Netzkommunikationssystem, umfassend ein Partner-zu-Partner(P2P)-System und einen Medienserver, wobei das P2P-System mindestens einen Client und mindestens einen übergeordneten Partner des Clients umfasst;
wobei der Client im P2P-System so ausgelegt ist, dass er einen Medienserver gemäß einem von einem Benutzer ausgewählten Kanal und übergeordnete Partner des Clients im P2P-System bestimmt, eine Start-Slice-Gruppen-ID für aktuelle Datenverarbeitung gemäß zugehörigen Informationen der übergeordneten Partner bestimmt und eine Nachricht an den Medienserver sendet, um Daten des Kanals anzufordern, wobei die Nachricht die Start-Slice-Gruppen-ID mitführt, Daten an einen untergeordneten Partner des Clients sendet, prüft, ob ein letzter Übertragungspunkt des Medienservers in einem lokalen Puffer derselbe wie ein letzter Übertragungspunkt eines festgelegten übergeordneten Partners im lokalen Puffer ist, und bei Erkennen, dass der letzte Übertragungspunkt des Medienservers im lokalen Puffer derselbe wie der letzte Übertragungspunkt des festgelegten übergeordneten Partners im lokalen Puffer ist, den Medienserver benachrichtigt, die Datenübertragungsrate auf dieselbe wie die Bitrate des Kanals umzustellen; und prüft, ob ein letzter Übertragungspunkt des Medienservers im lokalen Puffer derselbe wie ein Übertragungsstartpunkt eines übergeordneten Partners im lokalen Puffer ist, und bei Erkennen, dass der letzte Übertragungspunkt des Medienservers im lokalen Puffer derselbe wie ein Übertragungsstartpunkt eines beliebigen übergeordneten Partners im lokalen Puffer ist, den Medienserver benachrichtigt, das Senden eines Datenteilstroms, der dem übergeordneten Partner entspricht, an den Client zu stoppen;
der Medienserver so ausgelegt ist, dass er die Daten des Kanals bei einer Startrate, die höher als die Bitrate des Kanals ist, gemäß der Start-Slice-Gruppen-ID an den Client sendet; und
der mindestens eine übergeordnete Partner so ausgelegt ist, dass er die Daten des Kanals sendet;
wobei der lokale Puffer im Client ist.

12. System nach Anspruch 11, wobei der Client ferner so ausgelegt ist, dass er einen Wiedergabebereich periodisch abtastet, wobei der Wiedergabebereich durch einen Stromzufuhrpunkt und eine eingestellte Wiedergabebereichslänge bestimmt wird, prüft, ob die Anzahl von Slices, die in einer Slice-Gruppe fehlen, größer als die Anzahl von redundanten Slices ist, und bei Erkennung dessen den Medienserver zu Ergänzung auffordert; und
der Medienserver ferner so ausgelegt ist, dass er Slices gemäß der Ergänzungsaufforderung an den Client sendet.

## Revendications

1. Procédé pour le traitement de données de communication en réseau, comprenant les étapes consistant à :
déterminer (S102) un serveur multimédia et des postes parents d'un client dans un système de poste à poste, P2P, en fonction d'un canal sélectionné par un utilisateur ;
déterminer (S 104) un ID de groupe de tranches de départ pour le traitement de données actuel à partir d'informations liées concernant les postes parents ;
envoyer (S 105) un message au serveur multimédia pour demander les données du canal, le message contenant l'ID de groupe de tranches de départ ; et
recevoir (S106) les données du canal, les données du canal étant envoyées par le serveur multimédia à un débit de départ qui est supérieur au débit binaire du canal d'après l'ID de groupe de tranches de départ, et recevoir (S107) les données du canal émises par les postes parents ;
lorsqu'il est détecté qu'un point d'émission le plus récent du serveur multimédia dans un tampon local est le même qu'un point d'émission le plus récent d'un poste parent désigné dans le tampon local, donner l'instruction au serveur multimédia de changer le débit d'émission de données pour le rendre identique au débit binaire du canal ; le tampon local étant dans le client ; et
lorsqu'il est détecté que le point d'émission le plus récent du serveur multimédia dans le tampon local est le même qu'un point d'émission de départ d'un poste parent quelconque dans le tampon local, donner l'instruction au serveur multimédia d'arrêter d'envoyer au client un sous-flux de données correspondant au poste parent.

2. Procédé selon la revendication 1, dans lequel le processus de détermination (S104) de l'ID de groupe de tranches de départ comprend les étapes consistant à :
calculer le nombre de groupes de tranches qui peuvent mis en antémémoire dans une zone tampon réservée prédéfinie en fonction du débit binaire du canal sélectionné, de la taille d'une tranche et de la taille de la zone tampon réservée ; et
déterminer l'ID de groupe de tranches de départ par référence à un ID de groupe de tranches d'un point d'émission le plus récent actuel d'un premier poste parent désigné, le groupe de tranches de départ étant en avance par rapport au groupe de tranches du point d'émission le plus récent actuel du premier poste parent désigné.

3. Procédé selon la revendication 1, dans lequel le processus d'envoi des données du canal au client d'après l'ID de groupe de tranches de départ à un débit de départ qui est supérieur au débit binaire du canal (S 106) comprend les étapes consistant à :
déterminer un débit de départ utilisé par le serveur multimédia pour envoyer les données du canal au client, le débit de départ étant supérieur au débit binaire du canal ; et
envoyer, par le serveur multimédia, les données du canal au client d'après l'ID de groupe de tranches de départ au débit de départ qui est supérieur au débit binaire du canal.

4. Procédé selon la revendication 3, dans lequel le processus de détermination du débit de départ comprend les étapes consistant à :
déterminer, par le serveur multimédia, le débit de départ d'après des temps de débit binaire configurés localement et le débit binaire du canal ;
ou
déterminer, par le serveur multimédia, le débit de départ d'après le débit binaire du canal et des temps de débit binaire contenus dans la demande du client.

5. Procédé selon la revendication 1, comprenant également les étapes consistant à :
explorer, par le client, une zone de lecture périodiquement, la zone de lecture étant déterminée par un point de fourniture de flux et une longueur de zone de lecture définie ;
vérifier (S201) si le nombre de tranches manquantes dans le groupe de tranches est supérieur au nombre de tranches redondantes ; et
demander (S201) un réapprovisionnement du serveur multimédia lorsque le nombre de tranches du groupe de tranches est supérieur au nombre de tranches redondantes ;
et
en conséquence, renvoyer (S202), par le serveur multimédia, les tranches réapprovisionnées en fonction de la demande.

6. Procédé selon la revendication 5, dans lequel le processus consistant à demander un réapprovisionnement au serveur multimédia (S201) comprend les étapes consistant à :
demander, par le client, au serveur multimédia de réapprovisionner les tranches manquantes partielles en fonction du nombre de tranches manquantes dans le groupe de tranches ; et
rétablir, par le client, les données du groupe de tranches après l'obtention des tranches manquantes partielles.

7. Procédé selon la revendication 1, comprenant également les étapes consistant à :
vérifier, par le client, un débit de données moyen de chaque sous-flux présent dans un cycle, périodiquement ;
déterminer que le sous-flux est exceptionnel, et changer une source là où le client obtient le sous-flux lorsqu'il détecte que le débit de données moyen d'un sous-flux est inférieur à un cinquième seuil défini dans une proportion définie ou un nombre de cycles défini dans un temps spécifié.

8. Client, comprenant :
un sélecteur de canal, conçu pour déterminer un canal sélectionné par un utilisateur ;
un gestionnaire de topologies, conçu pour déterminer un serveur multimédia et des postes parents du client dans un système de poste à poste, P2P, en fonction du canal sélectionné par le sélecteur de canal, déterminer un ID de groupe de tranches de départ pour un traitement de données actuel à partir d'informations liées concernant les postes parents, et envoyer un message au serveur multimédia pour demander les données du canal, le message contenant l'ID de groupe de tranches de départ ; et
un gestionnaire de tampons, conçu pour recevoir les données du canal, les données du canal étant émises par le serveur multimédia à un débit de départ qui est supérieur au débit binaire du canal d'après l'ID de groupe de tranches de départ, et pour recevoir les données du canal émises par les postes parents ;
dans lequel le gestionnaire de tampons comprend :
une première unité de fonction conçue pour vérifier si un point d'émission le plus récent du serveur multimédia dans un tampon local est le même qu'un point d'émission le plus récent d'un poste parent désigné dans le tampon local, et lorsqu'il est détecté que le point d'émission le plus récent du serveur multimédia dans le tampon local est le même que le point d'émission de départ du poste parent désigné dans le tampon local, donner l'instruction au serveur multimédia de changer le débit d'émission de données pour le rendre identique au débit binaire du canal ; et
une deuxième unité de fonction conçue pour vérifier si un point d'émission le plus récent du serveur multimédia dans le tampon local est le même qu'un point d'émission de départ d'un poste parent dans le tampon local, et lorsqu'il est détecté que le point d'émission le plus récent du serveur multimédia dans le tampon local est le même que le point d'émission de départ d'un poste parent quelconque dans le tampon local, donner l'instruction au serveur multimédia d'arrêter d'envoyer au client un sous-flux de données correspondant au poste parent ;
le tampon local étant dans le client.

9. Client selon la revendication 8,
dans lequel le gestionnaire de tampons comprend également une quatrième unité de fonction, conçue pour explorer une zone de lecture périodiquement dans le gestionnaire de tampons, la zone de lecture étant déterminée par un point de fourniture de flux et une longueur de zone de lecture définie, vérifier si le nombre de tranches manquantes dans un groupe de tranches de la zone de lecture est supérieur au nombre de tranches redondantes, et lorsqu'il est détecté que c'est le cas, demander au serveur multimédia un réapprovisionnement.

10. Client selon la revendication 8, dans lequel le gestionnaire de tampons comprend également une cinquième unité de fonction, conçue pour vérifier périodiquement un débit de données moyen de chaque sous-flux présent dans un cycle, et lorsqu'il est détecté que le débit de données moyen d'un sous-flux est inférieur à un cinquième seuil défini dans une proportion définie ou un nombre de cycles défini dans un temps spécifié, déterminer que le sous-flux est exceptionnel, et envoyer une notification au gestionnaire de topologies ; et en conséquence,
le gestionnaire de topologies est conçu pour changer une source là où le client obtient le sous-flux en fonction de la notification.

11. Système de communication en réseau, comprenant un système de poste à poste, P2P, et un serveur multimédia, le système P2P comprenant au moins un client et au moins un poste parent du client ;
dans lequel le client du système P2P est conçu pour déterminer un serveur multimédia en fonction d'un canal sélectionné par un utilisateur et des postes parents du client du système P2P, pour déterminer un ID de groupe de tranches de départ pour le traitement de données actuel à partir d'informations liées concernant les postes parents, et pour envoyer un message au serveur multimédia pour demander les données du canal, le message contenant l'ID de groupe de tranches de départ, pour envoyer les données à un poste enfant du client, pour vérifier si un point d'émission le plus récent du serveur multimédia dans un tampon local est le même qu'un point d'émission le plus récent d'un poste parent désigné dans le tampon local, et lorsqu'il est détecté que le point d'émission le plus récent du serveur multimédia dans le tampon local est le même que le point d'émission le plus récent du poste parent désigné dans le tampon local, donner l'instruction au serveur multimédia de changer le débit d'émission de données pour le rendre identique au débit binaire du canal ; et pour vérifier si un point d'émission le plus récent du serveur multimédia dans le tampon local est le même qu'un point d'émission de départ d'un poste parent dans le tampon local, et lorsqu'il est détecté que le point d'émission le plus récent du serveur multimédia dans le tampon local est le même qu'un point d'émission de départ d'un poste parent quelconque dans le tampon local, donner l'instruction au serveur multimédia d'arrêter d'envoyer au client un sous-flux de données correspondant au poste parent ;
le serveur multimédia est conçu pour envoyer au client les données du canal à un débit de départ qui est supérieur au débit binaire du canal d'après l'ID de groupe de tranches de départ, et
ledit au moins un poste parent est conçu pour émettre les données du canal ;
le tampon local étant dans le client.

12. Système selon la revendication 11, dans lequel le client est également conçu pour explorer une zone de lecture périodiquement, la zone de lecture étant déterminée par un point de fourniture de flux et une longueur de zone de lecture définie, et vérifier si le nombre de tranches manquantes dans un groupe de tranches est supérieur au nombre de tranches redondantes, et lorsqu'il est détecté que c'est le cas, demander un réapprovisionnement au serveur multimédia ; et
le serveur multimédia est également conçu pour envoyer au client des tranches en fonction de la demande de réapprovisionnement.
